# EUROPÄISCHE PATENTSCHRIFT

(11) **EP 0 747 263 B1**
(45) Veröffentlichungstag und Bekanntmachung des Hinweises auf die Patenterteilung: **07.02.2001**
(21) Anmeldenummer: 96107468.9
(22) Anmeldetag: 10.05.1996
(51) Int. Cl.: B60Q 1/14

(54) **Lenkstockschalter mit Sperre gegen unbeabsichtigtes Schalten**
Steering column switch with locking device against unintentional switching
Interrupteur de colonne de direction avec blocage pour éviter une commande non intentionnelle

(30) Priorität: 09.06.1995 DE 19521085
(43) Veröffentlichungstag der Anmeldung: 11.12.1996
(73) Patentinhaber: Valeo Schalter und Sensoren GmbH, 74321 Bietigheim-Bissingen (DE)
(72) Erfinder: Cristofaro, Salvador, 73114 Schlat (DE); Simonis, Karl, 74366 Kirchheim a. N. (DE); Hecht, Walter, 74321 Bietigheim-Bissingen (DE); Klein, Rudolf, 74348 Lauffen a. N. (DE)
(74) Vertreter: Dreiss, Fuhlendorf, Steimle & Becker

(56) Entgegenhaltungen:
- FR-A- 2 199 709

## Beschreibung

Die Erfindung betrifft einen Lenkstockschalter mit den Merkmalen des Oberbegriffs des Anspruchs 1.

Ein derartiger Schalter ist beispielsweise aus der FR-A-2 199 809 oder der DE-A-40 20 844 bekannt. Insbesondere unter dem Gesichtspunkt, daß der Schalthebel auch noch in einer zweiten Ebene schwenkbar ist und so die unabhängige Betätigung eines dritten Schalters im Schaltgehäuse zuläßt, ist nicht auszuschließen, daß der Fahrer, insbesondere in kritischen Fahrsituationen, den Lenkstockschalter falsch bedient. Die mit dem Lenkstockschalter gewöhnlich betriebenen KFZ-Lampen haben nicht nur Ausleuchtfunktionen bei der Dunkelheit sondern können auch gleichzeitig Warn- und Signalfunktionen haben.

So ist es schon vorgekommen, daß eine Bedienungsperson beim zur Betätigung der Lichthupe dienenden Schwenken des Schalthebels gleichzeitig die Drehwelle um ihre Längsachse gedreht und damit das notwendige Hauptlicht ausgeschaltet hat. Hierdurch können nicht nur bei Dunkelheit gefährliche Situationen entstehen.

Es kann auch sein, daß bei wiederholter Betätigung der Lichthupe, entgegen den Vorschriften in nordischen Ländern, bei Tageslicht versehentlich das Hauptlicht ausgeschaltet wird.

Ausgehend von der DE-A-40 20 844 liegt der Erfindung die Aufgabe zugrunde, bei einem gattungsgemäßen Schalter zu verhindern, daß die Drehwelle betätigt werden kann, wenn sich der Schalthebel in zumindest einer bestimmten Schwenklage befindet.

Diese Aufgabe wird durch die Merkmale des Anspruchs 1 oder des Anspruchs 2 gelöst.

Die Erfindung besteht im Prinzip also darin, daß in der Lage des Schalthebels, in der kein Drehen der Drehwelle möglich sein soll, durch eine vorzugsweise mechanische Verriegelung dafür gesorgt wird, daß in dieser Schwenklage des Schalthebels die Drehwelle auch tatsächlich gegenüber dem Schalthebel nicht verdreht werden kann.

Eine besonders einfache Ausgestaltung der erwünschten Verriegelungsmöglichkeit ergibt sich durch die Merkmalskombination nach Anspruch 3, da hier erreicht wird, daß ein Vorsprung in eine entsprechende Öffnung der Drehwelle eingreifen kann. Die Befestigung des Vorsprungs muß dabei nicht unmittelbar am Schaltergehäuse sein, wie dies anhand der nachfolgenden Merkmale noch erläutert wird. Wichtig ist, daß die Drehwelle eine relativ einfache Form beibehält und keine größeren von ihr abstehenden zusätzlichen Teile aufweist, die die Verriegelung ermöglichen.

Um hinsichtlich mehrerer vorbestimmter Drehstellungen der Drehwelle gegenüber dem Schalthebel in dessen Schwenklager ein neuerliches Verdrehen der Welle auszuschließen empfiehlt sich in Weiterbildung der Erfindung die Merkmalskombination nach Anspruch 4. Danach ist einzelnen Drehstellungen des Hauptschalters jeweils eine Ausnehmung in der Drehwelle zugeordnet, in die dann der zweite Vorsprung eingreifen kann, welcher direkt oder indirekt mit dem Schaltgehäuse verbunden ist.

Die Erfindung ist insbesondere mit Vorteil entsprechend der Merkmalskombination nach Anspruch 5 für Lenkstockschalter einsetzbar, bei denen der Schalthebel in zwei verschiedenen Ebenen schwenkbar ist, wobei die Schwenkung innerhalb der zusätzlichen zweiten Ebene in an sich bekannter Weise über einen Mitnehmer in dem Schaltergehäuse geschieht. Für diesen Fall empfiehlt es sich, daß der erste Vorsprung nicht direkt am Schaltergehäuse sondern am Mitnehmer selbst befestigt ist. Dies kann durch eine einstückige Befestigung, beispielsweise durch Angießen des ersten Vorsprunges an dem Mitnehmer geschehen.

Ein Ausführungsbeispiel der Erfindung wird nachfolgend anhand der Zeichnung erläutert. Darin zeigt:
- Fig. 1: in abgebrochener Darstellung den Schnitt durch einen Schwenkhebel, der in einen Mitnehmer innerhalb des Schaltergehäuses ragt und
- Fig. 2: einen Schnitt durch Fig. 1 in Höhe der Schnittlinie A - A.

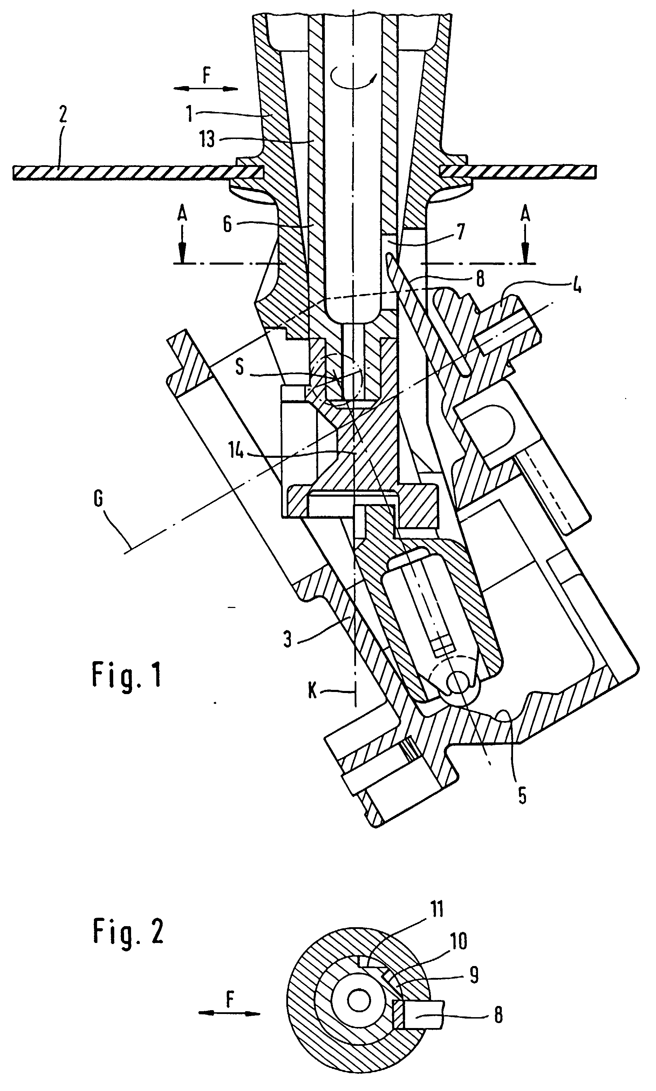

Fig. 1 zeigt den Schalthebel 1, welcher mit einer elastischen Abdeckung 2 verbunden ist, welche einerseits Schmutz von dem Schaltersystem fern hält, andererseits aber eine Schwenkbewegung des Schalthebels 1 nicht behindert. Die Schwenkung kann in Richtung des Doppelpfeils F und auch senkrecht hierzu um eine Schwenkachse G erfolgen. Das in der Fig. 1 nach unten ragende Ende Schalthebels 1 taucht in einen Mitnehmer 3 ein, welcher über Zapfen (zum Beispiel Zapfen 4) in dem nicht dargestellten Schaltergehäuse um die Drehachse G schwenkbar ist. Damit läßt sich auch der Schalthebel 1 senkrecht zu der Schwenkrichtung F schwenken.

Das untere Ende des Schalthebels ist in an sich bekannter Weise mit einer federnd vorgespannten Schaltwalze versehen, welche in Zusammenwirken mit einer Schaltkontur 5 Raststellungen für den Schalthebel 1 schafft, welchen bestimmte Schwenkstellungen des Schalthebels zugeordnet sind.

Innerhalb des Schalthebels 1 ist eine Drehwelle 6 drehbar um ihre Längsachse K gelagert, so daß durch ihre Drehbewegung ein in der Fig. nicht dargestelltes zweites Schaltsystem innerhalb des Schaltgehäuses betätigt werden kann.

Für die Erfindung besonders wichtig ist nun zumindest eine Ausnehmung 7 in der Drehwelle 6 in die ein Vorsprung 8 des Mitnehmers 3 ragt (siehe auch Fig. 2). Das Eingreifen des Vorsprungs 8 in die Ausnehmung 7 geschieht dadurch, daß der Schalthebel 1 in Richtung des rechten Pfeils F, in Fig. 1 nach rechts geschwenkt wird. Wird andererseits aus der in Fig. 1 gezeigten Stellung der Schalthebel in Richtung des linken Pfeils F, nach links geschwenkt, so kommt der Vorsprung 8 außer Eingriff, so daß die Drehwelle 6, gegenüber dem Schalthebel 1 um die Längsachse K verdreht wird und damit die Betätigung des zugehörigen Schaltsystems erreicht werden kann.

Aus Fig. 2 ist weiterhin zu erkennen, daß der Vorsprung 8 außerhalb der Symmetrieebne des Schalthebels 1 liegt. Es läßt sich aus Fig. 2 weiterhin entnehmen, daß die Ausnehmung in Richtung der Schnittebene von Fig. 2 im wesentlichen einen dreieckförmigen Querschnitt 9 besitzt. Es kann aber auch, wie aus Fig. 1 ersichtlich, die Ausnehmung 7 die hülsenförmige Wand 12 gänzlich durchbrechen.

Wie aus Fig. 2 ersichtlich, können statt einer einzigen Ausnehmung 7 auch zusätzliche Ausnehmungen 10 und 11 vorgesehen sein, welche den verschiedenen Drehlagen der Drehwelle gegenüber dem Schalthebel 1 zugeordnet sind und in diesen Schaltlagen die Drehwelle gegenüber dem Schalthebel bei einer entsprechenden Schwenklage verriegeln.

Aus Fig. 1 ist noch ersichtlich, daß die Drehwelle sich aus zwei unlösbar miteinander verbundenen Teilen zusammensetzt, nämlich aus der Betätigungshülse 13 und einem Betätigungsglied 14. Der Schalthebel ist um die senkrecht zur Betrachtungsebene der Fig. 1 stehende Drehachse S schwenkbar.

## Patentansprüche

1. Lenkstockschalter, bei dem ein in ein Schaltergehäuse ragender und in diesem zur Betätigung eines ersten Schaltsystems zumindest in einer ersten Ebene (F) schwenkbar gelagerter Schalthebel (1) die Aufnahmehülse für eine Drehwelle (6) bildet, durch deren Drehbewegung um deren Längsache (G) über deren gehäuseseitiges Ende (13) ein in dem Schaltergehäuse befindliches zweites Schaltsystem antreibbar ist, dadurch gekennzeichnet, daß die Drehwelle (6) gehäuseseitig mit einer Ausnehmung (7) versehen ist, in die bei einer geeigneten Schwenkbewegung des Schalthebels (1) ein mit dem Schaltergehäuse verbundener Vorsprung eingreift und so die Drehbarkeit der Drehwelle (6) im Schalthebel verhindert.

2. Lenkstockschalter, bei dem ein in ein Schaltergehäuse ragender und in diesem zur Betätigung eines ersten Schaltsystems zumindest in einer ersten Ebene (F) schwenkbar gelagerter Schalthebel (1) die Aufnahmehülse für eine Drehwelle (6) bildet, durch deren Drehbewegung um deren Längsache (G) über deren gehäuseseitiges Ende (13) ein in dem Schaltergehäuse befindliches zweites Schaltsystem antreibbar ist, dadurch gekennzeichnet, daß die Drehwelle (6) gehäuseseitig mit einem Vorsprung versehen ist, der bei einer geeigneten Schwenkbewegung des Schalthebels (1) in eine mit dem Schaltergehäuse verbundene Ausnehmung eingreift und so die Drehbarkeit der Drehwelle (6) im Schalthebel verhindert.

3. Lenkstockschalter nach Anspruch 1, dadurch gekennzeichnet, daß der erste Vorsprung mittelbar, oder unmittelbar am Schaltergehäuse befestigt ist und bei entsprechender Schwenkung (F) des Schalthebels (1) in eine in der Drehwelle (6) angeordnete Ausnehmung (7) eingreift.

4. Lenkstockschalter nach Anspruch 3, dadurch gekennzeichnet, daß mehrere Ausnehmungen (7, 10, 11) über dem Umfang der Drehwelle (6) verteilt an dieser vorgesehen sind.

5. Lenkstockschalter nach Ansprüche 1, 3 oder 4, dadurch gekennzeichnet, daß der erste Vorsprung (8) mit einem schwenkbar in einem Schaltergehäuse gelagerten Mitnehmer (3) einstückig verbunden ist, wobei über eine in einer zweiten Ebene (G) erfolgenden zweiten Schwenkbewegung des Schalthebels (1) ein drittes Schaltersystem betätigbar ist.

## Claims

1. Steering column switch, wherein a control lever (1), projecting into a switch casing and being pivotably supported therein for actuating a first switching system in at least one first plane (F), forms the reception sleeve for a rotary shaft (6), whose rotary motion about its longitudinal axis (G), via its end (13) on the casing side, can drive a second switching system located in the switch casing, characterized in that the rotary shaft (6) is provided with a first recess (7) on the casing side into which a first projection connected to the switch casing engages during a suitable pivoting motion of the control lever (1) to thereby prevent rotation of the rotary shaft (6) in the control lever.

2. Steering column switch, wherein a control lever (1), projecting into a switch casing and being pivotably supported therein for actuating a first switching system in at least one first plane (F), forms the reception sleeve for a rotary shaft (6) whose rotary motion about its longitudinal axis (G), via its end (13) on the casing side, can drive a second switching system located in the switch casing, characterized in that the rotary shaft (6) is provided with a second projection on the casing side which, during a suitable pivoting motion of the control lever (1), engages into a second recess connected to the switch casing to thereby prevent rotation of the rotary shaft (6) in the control lever.

3. Steering column switch according to claim 1,
characterized in that the first projection is mounted directly or indirectly on the switch casing and engages into a recess (7) disposed in the rotary shaft (6) during corresponding pivoting (F) of the control lever (1).

4. Steering column switch according to claim 3,
characterized in that several recesses (7,10,11) are distributed about the circumference of the rotary shaft (6).

5. Steering column switch according to the claims 1, 3 or 4, characterized in that the first projection (8) is integral with a carrier (3) pivotably supported in a switch casing, wherein a third switching system can be actuated through a second pivoting motion of the control lever (1) in a second plane (G).

## Revendications

1. Commutateur de colonne de direction, dans lequel un levier de commutation (1), qui pénètre dans un boîtier de commutateur et est monté dans celui-ci d'une manière basculante en vue de l'actionnement d'un premier dispositif de commutation au moins dans un premier plan (F), constitue le manchon de logement d'une tige rotative (6) au moyen d'un mouvement de rotation de laquelle, autour de son axe longitudinal (G) et à l'aide de son extrémité (13) côté boîtier, un deuxième dispositif de commutation situé dans le boîtier de commutateur peut être entraîné, caractérisé en ce que la tige de rotation (6) est pourvue, du côté boîtier, d'un évidement (7) dans lequel, moyennant un mouvement de basculement approprié du levier de commutation (1), une saillie solidaire du boîtier de commutateur vient en prise et s'oppose ainsi à la capacité de rotation de la tige rotative (6) dans le levier de commutation.

2. Commutateur de colonne de direction, dans lequel un levier de commutation (1), qui pénètre dans un boîtier de commutateur et est monté dans celui-ci d'une manière basculante en vue de l'actionnement d'un premier dispositif de commutation au moins dans un premier plan (F), constitue le manchon de logement d'une tige rotative (6) au moyen d'un mouvement de rotation de laquelle, autour de son axe longitudinal (G) et à l'aide de son extrémité (13) côté boîtier, un deuxième dispositif de commutation situé dans le boîtier de commutateur peut être entraîné, caractérisé en ce que la tige de rotation (6) est pourvue, du côté boîtier, d'une saillie qui, moyennant un mouvement de basculement approprié du levier de commutation (1), vient en prise dans un évidement ménagé dans le boîtier de commutateur et s'oppose ainsi à la capacité de rotation de la tige rotative (6) dans le levier de commutation.

3. Commutateur de colonne de direction suivant la revendication 1, caractérisé en ce que la première saillie est solidaire, directement ou indirectement, du boîtier de commutateur et, moyennant un basculement approprié (F) du levier de commutation (1), vient en prise dans un évidement (7) ménagé dans la tige rotative (6).

4. Commutateur de colonne de direction suivant la revendication 3, caractérisé en ce que plusieurs évidements (7, 10, 11) sont prévus sur la tige de rotation (6) en étant répartis à la périphérie de celle-ci.

5. Commutateur de colonne de direction suivant les revendications 1, 3 ou 4, caractérisé en ce que la première saillie (8) est solidaire, d'une seule pièce, d'un élément d'entraînement (3) monté de façon à pouvoir basculer dans un boîtier de commutateur, un troisième dispositif de commutateur pouvant être actionné à l'aide d'un second mouvement de basculement du levier de commutation (1) ayant lieu dans un second plan (G).
